(19) Europäisches Patentamt
European Patent Office
Office européen des brevets

(11) Publication number: 0 187 855 B1

(12) # EUROPEAN PATENT SPECIFICATION

(45) Date of publication of patent specification: **10.02.93**

(51) Int. Cl.5: **C08G 59/42**, C08G 59/50, C08G 59/56, C08G 59/62

(21) Application number: **85903905.9**

(22) Date of filing: **16.07.85**

(86) International application number: **PCT/US85/01344**

(87) International publication number: **WO 86/00627 (30.01.86 86/03)**

(54) **PARTIALLY ADVANCED EPOXY RESIN COMPOSITIONS AND PRODUCTS RESULTING FROM REACTING AND CURING SAID COMPOSITIONS.**

(30) Priority: **17.07.84 US 631676**
**25.03.85 US 716279**

(43) Date of publication of application: **23.07.86 Bulletin 86/30**

(45) Publication of the grant of the patent: **10.02.93 Bulletin 93/06**

(84) Designated Contracting States: **AT BE CH DE FR GB IT LI NL SE**

(56) References cited:
**EP-A- 0 077 758**
**WO-A-82/01877**
**WO-A-86/01216**
**US-A- 3 687 894**
**US-A- 3 725 341**
**US-A- 3 919 169**
**US-A- 4 320 222**
**US-A- 4 438 254**
**EP-A- 0 132 789**
**WO-A-84/03289**
**DE-A- 2 162 809**
**US-A- 3 694 407**
**US-A- 3 738 862**
**US-A- 4 026 862**
**US-A- 4 358 578**
**US-A- 4 477 645**

(73) Proprietor: **THE DOW CHEMICAL COMPANY**
**2030 Dow Center Abbott Road P.O. Box 1967**
**Midland Michigan 48640-1967(US)**

(72) Inventor: **BERTRAM, James, L.**
**115 Southern Oaks Drive**
**Lake Jackson, TX 77566(US)**
Inventor: **WALKER, Louis, L.**
**246 Barbara Drive**
**Clute, TX 77531(US)**
Inventor: **BERMAN, Jody, R.**
**406 Wisteria**
**Lake Jackson, TX 77566(US)**
Inventor: **CLARKE, James, A.**
**120 Blossom**
**Lake Jackson, TX 77566(US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 187 855 B1

## Description

The present invention concerns partially advanced epoxy resin compositions and products resulting from reacting and curing said compositions.

Lee and Neville in HANDBOOK OF EPOXY RESINS, McGraw-Hill, 1967 have disclosed products obtained by curing advanced epoxy resins.

While these cured products have good properties, application of the mixtures of epoxy resins and the curing agent are very difficult in that they are highly viscous, are difficult to devolatilize and at a temperature sufficiently high to achieve a suitable viscosity, the working time or pot life is relatively short.

U S -A- 3,738,862 is directed to laminates prepared in situ by impregnating a glass cloth with a varnish comprising an epoxy resin containing an organic phosphine or a phosphonium halide, a phenol, a solvent, an epoxy curing agent and, optionally an accelerator. It is pointed out that the hot strength of the "in situ" laminates is superior to the hot strength of laminates prepared from conventional kettle epoxy resin binders.

U S -A- 3,687,894 is directed to compositions for one-step simultaneous advancement and B staging or curing of liquid epoxy resins. The methods involve forming a composition in a solvent system of the liquid epoxy resin, a hydroxyl containing material retractable therewith at elevated temperatures and a hardener therefore, applying the mixture to a suitable substrate and subjecting the composite to elevated temperatures.

US-A-3,919,169 describes a process for the continuous production of solid resins whereby a reaction mixture comprising a liquid aromatic epoxy resin, a dihydrid phenol and a catalyst for effecting a reaction between the liquid epoxy resin and dihydric phenol is first passed through a preheat zone wherein the reaction mixture is heated to a temperature below the reaction temperature of the mixture, second, a reaction zone wherein the reaction mixture is maintained at a temperature between 130° and 250°C and third a post-heat zone wherein the temperature is maintained between 130° and 250°C.

In US-A-3,694,407 solid, fusible, acetone-soluble epoxy containing condensates are disclosed which are prepared by reacting a polyepoxide having more than one vicinal epoxy group with a special polyhydric phenol in the presence of an organic phosphine or hydrocarbon phosphonium halide as catalyst. Additionally amines and imidazole compounds can be present.

US-A-4,438,254 is directed to a process for reacting vicinal epoxides with phenols or thiophenols. This process is conducted at essentially anhydrous conditions and temperatures less than 175°C resulting in an advanced resin having improved properties. As catalst phosphonium compounds are utilized which remain active to promote subsequent advancement or curing reaction.

EP-A-0 077 758 describes an epoxy resin composition prepared by reacting a polyepoxide compound having an epoxide functionality greater than two and a diglycidyl ether of a polyhydric phenol with a polyhydric phenol. This composition can be used in combination with a novolac curing agent in a molding process.

The object of the present invention is to provide an epoxy resin composition allowing an easier application and resulting in a cured product having improved properties in comparison to prior art epoxy resin compositions.

This object has been attained by a partially advanced solventless epoxy resin composition obtainable by reacting a composition comprising

(A) at least one relatively low equivalent weight epoxy resin having an average of more than one vicinal epoxy group per molecule;

(B) at least one extender material having an average of two active hydrogen atoms per molecule which are reactive with vicinal epoxy groups wherein (A) and (B) are present in quantities providing from 0.15 to 0.85 active hydrogen equivalent in component (B) per epoxide equivalent in component (A);

(C) one or more epoxy curing agents and optionally,

(D) one or more catalysts for promoting the reaction between components (A) and (B) characterized in that the one or more epoxy curing agents (C) comprises an aromatic sulfonic acid amide represented by the formula

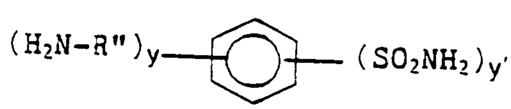

wherein each R" is independently a single bond or a divalent hydrocarbon group having from 1-4 carbon

atoms, each y and y' independently have values from 1 to 3 preferably each have a value of 1 and component (C) is present in an amount from 0.05 to 0.9 , preferably from 0.05 to 0.75, most preferably from 0.075 to 0.75 equivalent per epoxide equivalent of component (A) and the combined equivalents of components (B) and (C) per epoxide equivalent in component (A) are from 0.2:1 to 1.1:1, preferably from 0.2:1 to 1.05 :1, most preferably from 0.325:1 to 1:1 and component (D) is present in an amount from zero to 0.1, preferably from 0.00005 to 0.05, most preferably from 0.0001 to 0.03 mole per epoxide equivalent of component (A) and wherein the composition has been reacted to the extent that the composition is melt flowable at or below 250 ° C and the melt viscosity has increased to a value which is at least 20 percent greater than the initial mixture of components (A), (B), and (C) and, if present (D).

The components (A), (B), and (C) are preferably present in quantities providing from 0.25 to 0.75 active hydrogen equivalent in component (B) per epoxide equivalent in component (A), from 0.05 to 0.75 equivalents of (C) per epoxide equivalent of (A) and from 0.2:1 to 1.05:1 of the combined equivalents of (B) and (C) per epoxide equivalent of (A).

The epoxy resin composition according to the present invention exhibit a low viscosity allowing lower application temperatures and extended working time or pot life in combination with an improvement in one or more of the properties of the cured product such as glass transition temperature (Tg) , fracture toughness ($G_{IC}$), impact flexural modulus and percent elongation.

The partly advanced epoxy resin compositions may optionally contain one or more stabilizer materials. When used, the stabilizer is present in a quantity sufficient to reduce the viscosity increase of the composition during storage, preferably from 0.0001 to 0.01, more preferably from 0.0005 to 0.005, mole of stabilizer per epoxide equivalent in component (A).

When the desired partly advanced epoxy resin composition is a semi-solid at room temperature, which is useful for coatings, laminates, composites, adhesives and castings, the composition is partly advanced to the extent that the melt viscosity has increased to a value which is preferably from 25 to 625, more preferably from 50 to 300, percent greater than the melt viscosity of the initial mixture of components (A), (B) and (C) and if present component (D). The composition is preferably melt flowable at or below 150 ° C, more preferably between 20 and 75 ° C.

When the desired partly advanced epoxy resin composition is a solid at room temperature, which is useful for powder coatings, the composition is partly advanced to the extent that the melt viscosity has increased to a value which is at least 1250 percent greater than the melt viscosity of the initial mixture of components (A), (B) and (C) and if present component(D). The composition is preferably melt flowable between 75 and 150 ° C, more preferably between 85 and 120 ° C.

Another aspect of the present invention pertains to a curable composition which comprises the partially advanced epoxy resin compositions described hereinbefore and at least one additional curing agent (E) so that the combined equivalents of components (B), (C) and (E) per epoxide equivalent in component (A) is from 0.6:1 to 1.1:1, preferably from 0.85:1 to 1.05:1 and most preferably from 0.9:1 to 1.05:1.

The compounds employed are in an equivalent ratio of (A):(B):(C + E) of from 1:0.1:0.5 to 1:0.9:0.2, preferably from 1:0.15:0.7 to 1:0.85:0.2 most preferably from 1:0,25:0,65 to 1:0,75:0,3.

Optionally, an additional catalytic quantity of one or more catalysts (F) for effecting the reaction between components (A) and (B) can be present.

The combined quantity of components (D) and (E) is that which provides from zero to 0.2, preferably from 0.0001 to 0.1, most preferably from 0.0005 to 0.05, mole of catalyst per epoxide equivalent in component ( A).

Said at least one additional curing agent (E) is selected from primary or secondary amimes, polyamides, mercaptans, carboxylic acids, carboxylic acid anhydrides, guanidines, biguanides, polyfunctional phenolic compounds and mixtures thereof.

Yet another aspect of the present invention is related to a process for preparing a partially advanced solventless epoxy resin composition by reacting a composition comprising

(A) at least one relatively low equivalent weight epoxy resin having an average of more than one vicinal epoxy group per molecule;

(B) at least one extender material having an average of two active hydrogen atoms per molecule which are reactive with vicinal epoxy groups wherein (A) and (B) are present in quantities providing from 0.15 to 0.85 active hydrogen equivalent in component (B) per epoxide equivalent in component (A);

(C) one or more epoxy curing agents; and optionally

(D) one or more catalysts for promoting the reaction between components (A) and (B),

characterized in that

the one or more epoxy curing agents (C) comprises an aromatic sulfonic acid amide represented by the formula

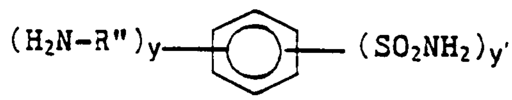

wherein each R" is independently a single bond or a divalent hydrocarbon group having from 1-4 carbon atoms, each y and y' independently have values from 1 to 3 preferably each have a value of 1 and is employed in an amount from 0.05 to 0.9 preferably form 0.05 to 0.75, most preferably from 0.075 to 0.75 equivalent per epoxide equivalent of component (A) and the combined equivalents of components (B) and (C) per epoxide equivalent in component (A) are from 0.2:1 to 1.1:1, preferably from 0.325:1 to 1:1 and component (0) is present in an amount from zero to 0.1 preferably from 0.00005 to 0.05, most preferably form 0.0001 to 0.03 mole per epoxide equivalent of component (A) and wherein the composition is reacted in the absence of a solvent to the extent that said composition is melt flowable at or below 250 ° C and the melt viscosity has increased to a value which is at least 20 percent greater than the initial mixture of components (A), (B) and (C) and (D), if present.

The components (A), (B) and (C) are preferably used in this process in amounts providing from 0.25 to 0.75 active hydrogen equivalent in component (B) per epoxide equivalent in compound (A, from 0.05 to 0.75 equivalents of (C) per epoxide equivalent of (A) and from 0.2:1 to 1.05:1 of the combined equivalents of (B) and (C) per epoxide equivalent of (A).

The process is characterized by partially advancing the epoxy resin to the extent that the resulting composition is melt flowable at or below 150 ° C and the melt viscosity has incresed to a value which is from 25 to 625 percent greater than the melt viscosity of the initial mixture or alternatively by partially advancing the epoxy resin to the extent that the melt viscosity of the resulting composition has increased to a value at least 1250 percent greater than the melt viscosity of the initial mixture.

Said partially advanced, solventless epoxy resin compositions or epoxy resin compositions prepared by the process described hereinbefore can be used as curable compositions for the preparation of laminates, composites, coatings, adhesives, castings, moldings, electronic encapsulations and potting compositions.

Additionally, the present invention is directed at a process for preparing a cured product which comprises subjecting to curing conditions a partially advanced solventless epoxy resin composition or an epoxy resin composition prepared by the process described hereinbefore.

Suitable compounds which can be employed herein as an extender include any compound having an average of 2 hydrogen atoms per molecule which are reactive with vicinal epoxy groups.

Suitable dihydric and polyhydric phenolic compounds which can be employed in the present invention as the extender include, for example, phthaleins and sulfonphthaleins having two phenolic hydroxyl groups, xanthenes having two phenolic hydroxyl groups and those represented by the formulas

I.

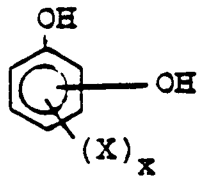

II.

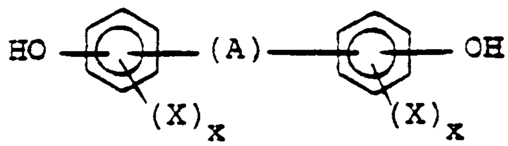

III.

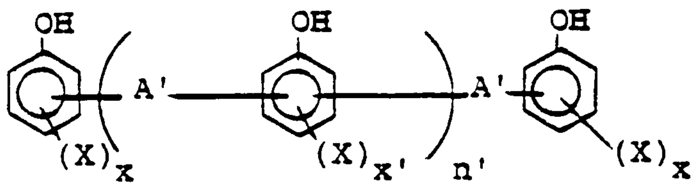

wherein A is a divalent hydrocarbyl group having from 1 to 10 carbon atoms, -O-, -S-, -S-S-,

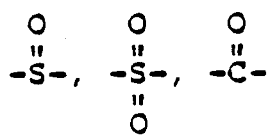

or

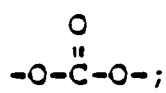

A' is a divalent hydrocarbyl group having from 1 to 10 carbon atoms or a divalent polycyclopentadiene group; each X is independently a monovalent hydrocarbyl group having from 1 to 10 carbon atoms, or a halogen; n' has an average value of greater than zero but not greater than 0.5; x has a value of from zero to 4; and x' has a value from zero to 3.

Suitable such phenolic hydroxyl-containing compounds include, for example, resorcinol, catechol, hydroquinone, bisphenol A, bisphenol K, bisphenol S, tetramethylbisphenol A, tetratertiarybutylbisphenol A, tetrabromobisphenol A, phenolphthalein, phenolsulfonphthalein, fluorescein, reaction products of dicyclopentadiene or oligomers thereof and a phenolic compound, and mixtures thereof.

Other suitable compounds which can be employed as an extender include for example, aniline, toluidine, butylamine, ethanolamine, N,N'-dimethyl pnenylene diamine, phthalic acid, adipic acid, fumaric acid, 1,2-dimercapto-4-methylbenzene, diphenyloxide dithiol, 1,4-butanedithiol, and mixtures thereof.

Suitable epoxy resins which can be employed herein include glycidyl ethers of phthaleins, sulfonphthaleins and xanthenes having two or more phenolic hydroxyl groups before reaction with an epihalohydrin and subsequent dehydrohalogenation to form said glycidyl ether and those represented by the formulas

IV. 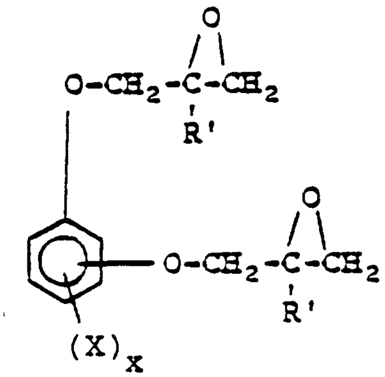

V. 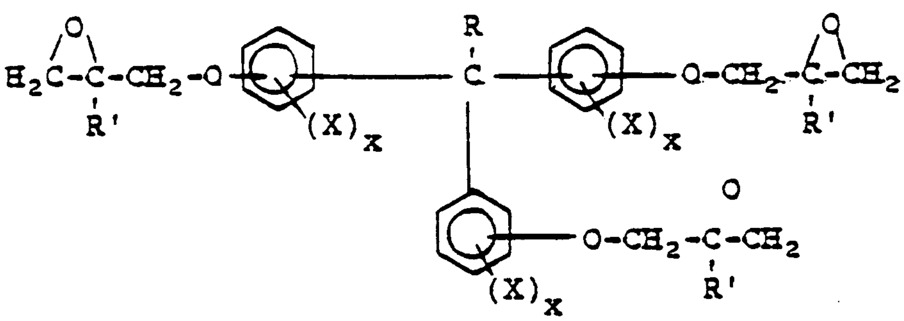

VI.

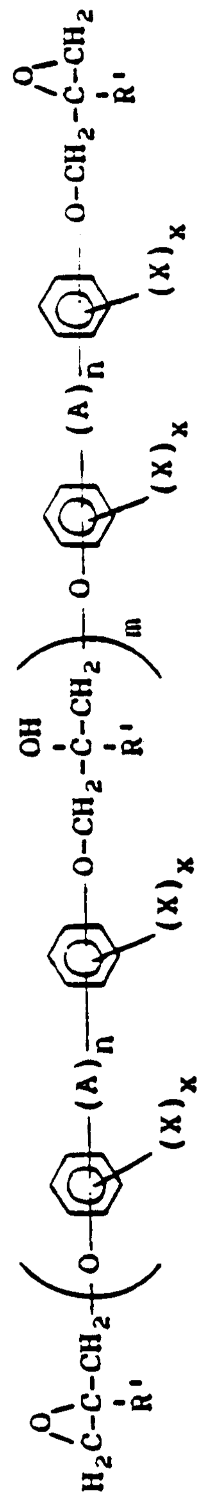

VII.

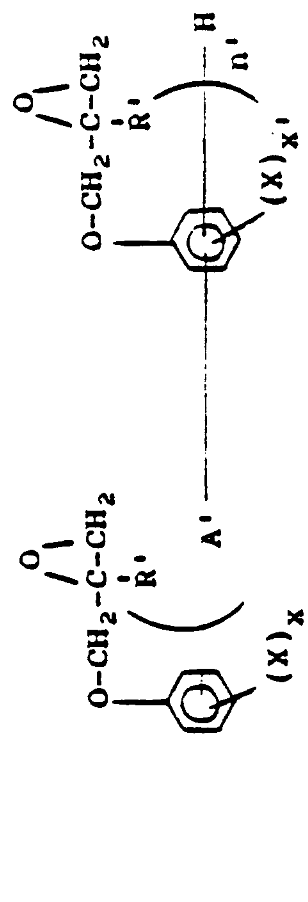

wherein A is a divalent hydrocarbyl group having from 1 to 10 carbon atoms, -O-, -S-, -S-S-,

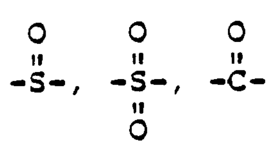

or

$$-O-\overset{\overset{\displaystyle O}{\|}}{C}-O-;$$

A' is a divalent hydrocarbyl group having from 1 to 10 carbon atoms or a divalent polycyclopentadiene group; R is hydrogen or a hydrocarbyl group having from 1 to 10 carbon atoms; R' is hydrogen or a hydrocarbyl group having from 1 to 4 carbon atoms; each X is independently a monovalent hydrocarbyl group having from 1 to 10 carbon atoms or a halogen; m has an average value of from zero to 10; n has a value of zero or 1; n' has an average value of from 1.01 to 7; and x has a value of from zero to 4.

Other suitable epoxy resins include glycidyl derivatives of amines, thiol, and acid compounds such as, for example, N,N,N',N'-tetrakis-(2,3-epoxypropyl)-p,p'-methylenedianiline, N,N-bis(2,3-epoxypropyl)-4-aminophenylglycidylether, diglycidyl thioether of diphenyloxide dithiol, diglycidylether of thiobisphenol A, N,N,N',N'-tetraglycidyl-4,4'-diamino diphenyl methane, 1,1,2,2-tetrakis(2,3-epoxypropoxyphenyl)ethane, diglycidyl adipate, diglycidyl phthalate, and mixtures thereof.

Other suitable epoxy resins include the cycloaliphatic epoxides such as, for example, 3,4-epoxycyclohexylmethyl-3,4-epoxycyclohexane carboxylate, vinyl cyclohexene dioxide, and mixtures thereof.

Suitable epoxy curing agents include primary and/or secondary amines, polyamides, mercaptans, carboxylic acids, carboxylic acid anhydrides, guanidines, biguanides, aromatic sulfonic acid amides, and mixtures thereof.

Particularly suitable curing agents include, for example, methylenedianiline, diaminodiphenyl sulfone, aminoethylpyrizine, 2-methylimidazole, dicyandiamide, ethylene diamine, diethylene triamine, triethylenetetramine, diaminocyclohexane, 4,4'-methylenedicyclohexylamine, phenylene diamine, sulfanilamide, aminoethylpiperizine, 3-(4-hydroxyphenyl)-3-(4-aminophenyl)propane, boron trifluoride monoethylamine, and mixtures thereof.

Also, polyfunctional phenolic compounds can be employed as curing agents such as, for example, phloroglucinol, pyrogallol, dipbenolic acid, tetrabromodiphenolic acid, tetramethyltrihydroxylbiphenyl, polyphenolics resulting from condensing an aldehyde with a phenolic compound or substituted phenolic compound or reaction products of dicyclopentadiene and oligomers thereof and a phenolic compound. Particularly suitable polyfunctional phenolic compounds include the novolac resins represented by formula III where n' has an average value of from 1.01 to 4 and condensation products of hydroxy benzaldehyde and a phenolic compound.

Other suitable curing agents include, for example, phthalic anhydride, trimellitic anhydride, nadic methyl anhydride, trimellitic acid, and mixtures thereof.

Suitable curing agents which are capable of acting as catalyst between the epoxy resin and the material having active hydrogen atoms reactive with an epoxy group include, for example, amines, amides, guanidines and sulfonamides such as, for example, aminoethylpiperazine, 2-methylimidazole, dicyandiamide, ethylene diamine, diethylene triamine, triethylene tetramine, diaminocyclohexane, and mixtures thereof when such curing agents are employed, a separate catalyst may be omitted.

Suitable catalysts for effecting the reaction between the epoxy resin and the phenolic hydroxyl-containing compound include, for example, those disclosed in U S -A-(S) 3,306,872; 3,341,580; 3,379,684; 3,477,990; 3,547,881; 3,637,590; 3,843,605; 3,948,855; 3,956,237; 4,048,141; 4,093,650; 4,131,633; 4,132,706; 4,171,420; 4,177,216, 4,302,574, 4,320,222, 4,358,578 4,366,295, and 4,389,520,.

Particularly suitable catalysts are those quaternary phosphonium and ammonium compounds such as, for example, ethyltriphenylphosphonium chloride, ethyltriphenylphosphonium bromide, ethyltriphenylphosphonium iodide, ethyltriphenylphosphonium acetate, ethyltriphenylphosphonium diacetate (ethyltriphenylphosphonium acetate•acetic acid complex), ethyltriphenylphosphonium tetrahaloborate, tetrabutylphosphonium chloride, tetrabutylphosphonium bromide, tetrabutylphosphonium iodide, tetrabutylphosphonium acetate, tetrabutylphosphonium diacetate (tetrabutylphosphomium acetate•acetic acid complex), tetrabutylphosphohium tetrahaloborate, butyltriphenylphosphonium tetrabromobisphenate, butyltriphenylphosphonium bisphenate, butyltriphenylphosphonium bicarbonate, benzyltrimethylammonium chloride, benzyltrimethylammonium hydroxide, benzyltrimethylammonium tetrahaloborate, tetramethylammonium hydroxide, tetrabutylammonium hydroxide, tetrabutylammonium tetrahaloborate, and mixtures thereof.

Other suitable catalysts include tertiary amines such as, for example, triethylamine, tripropylamine, tributylamine, 2-methylimidazole, benzyldimethylamine, and mixtures thereof.

Other suitable catalysts include ammonium compounds such as, for example, triethylamine•HCl complex, triethylamine•HBr complex, triethylamine•HI complex, triethylamine•tetrahaloboric acid complex, tributylamine•HCl complex, tributylamine•HBr complex, tributylamine•HI complex, tributylamine•tetrahaloboric acid complex, N,N'-dimethyl-1,2-diaminoethane•tetrahaloboric acid complex, and mixtures thereof.

Other suitable catalysts include quaternary and tertiary ammonium, phosphonium, and arsonium adducts or complexes with suitable non-nucleophilic acids such as, for example, fluoboric, fluoarsenic, fluoantimonic, fluophosphoric, perchloric, perbromic, periodic, and mixtures thereof.

Suitable stabilizers include organic and inorganic acids, salts and esters of organic and inorganic acids such as, for example, sulfonic acid, perchloric acid, boric acid, chloric acid, bromic acid, iodic acid, and nitric acid.

Particularly suitable are p-toluene sulfonic acid, benzene sulfonic acid, methyl p-toluene sulfonate, ammonium perchlorate, fluoboric acid, perchloric acid, nitric acid, and mixtures thereof.

The products of the present invention are suitable for such applications as laminates, composites, coatings, adhesives, castings, moldings, electronic encapsulations and in potting compositions.

Suitable solvents which can be employed in the preparation of coatings and laminates include, for example, ketones, alcohols, glycol ethers, aromatic and aliphatic hydrocarbons, cyclic ethers, halogenated hydrocarbons, and amides, such as, for example, acetone, methyl ethyl ketone, methanol, propylene glycol methyl ether and dimethyl formamide.

The products and compositions of the present invention may also contain, if desired, pigments, dyes, mold release agents, flow control agents, reinforcing agents, fillers, fire retardant agents, rubber modifiers, surfactants, accelerators, reactive diluents, and mixtures thereof.

The following examples are illustrative of the present invention but are not to be construed as to limiting the scope thereof in any manner.

The following components were employed in the examples and comparative experiments.

EPOXY RESIN A was a diglycidyl ether of bisphenol A having an average epoxide equivalent weight (EEW) of 184.5.

EPOXY RESIN B was a diglycidyl ether of bisphenol S, bis(4-hydroxyphenyl)sulfone, having an average EEW of 193.7.

EPOXY RESIN C was a phenol-formaldehyde epoxy novolac resin having an average functionality of about 3.6 and an average EEW of 179.7.

EPOXY RESIN D was a triglycidyl ether of tris(hydroxyphenyl)methanehaving an average EEW of 166.

EPOXY RESIN E was a diglycidyl ether of bisphenol K, bis(4-hydroxyphenyl)carbonyl, having an average EEW of 178.1.

EPOXY RESIN F was a diglycidyl ether of tetrabromo bisphenol A having an average EEW of 336.

EPOXY RESIN G was a triglycidyl ether of tris(hydroxyphenyl)methanehaving an average EEW of 163.

EPOXY RESIN H was the dehydrohalogenated reaction product of phenolphthalein and epichlorohydrin having an average EEW of 247.

EPOXY RESIN I was a diglycidyl ether of bisphenol A having an average epoxide equivalent weight of 181.3.

EPOXY RESIN J was a diglycidyl ether of tetrabromo bisphenol A having an average EEW of 328.

EPOXY RESIN K was the diglycidyl ether of tetrachloro bisphenol A having an average EEW of 246.

EPOXY RESIN L was a diglycidyl ether of bisphenol A having an average epoxide equivalent weight of 180.8.

EPOXY RESIN M was a diglycidyl ether of bisphenol A having an average epoxide equivalent weight Of 181.5.

EXTENDER COMPOUND A was tetrabromobisphenol A having an average phenolic hydroxyl equivalent weight (PHEW) of 272.

EXTENDER COMPOUND B was bisphenol K, bis(4-hydroxyphenyl)carbonyl, having an average PHEW of 107.

EXTENDER COMPOUND C was bisphenol S, bis(4-hydroxyphenyl)sulfone,having an average PHEW of 125.

EXTENDER COMPOUND D was pyrogallol having an average PHEW of 42.

EXTENDER COMPOUND E was dimethylhydantoin having an average equivalent weight of 64.

EXTENDER COMPOUND F was tetramethyi bisphenol A having a phenolic equivalent weight of 142.

EXTENDER COMPOUND G was tetrachloro bisphenol A, with a phenolic equivalent weight of 183.

EXTENDER COMPOUND H was tetramethyl bisphenol K having a phenolic equivalent weight of 135.

EXTENDER COMPOUND I was tetrabromobisphenol K having a phenolic equivalent weight of 265.

EXTENDER COMPOUND J was tetrabromodiphenolic acid having a phenolic equivalent weight of 301.

CURING AGENT A was sulfanilamide having an active hydrogen equivalent weight Of 43.
CURING AGENT B was a mixture of diaminocyclohexane isomers available from Pacific Anchor Chemical Corp. as ANCAMINE® 1770 having an amine hydrogen equivalent weight of 28.5.
CURING AGENT C was 4,4'-diaminodiphenylsulfone having an amine hydrogen equivalent weight of 62.
CATALYST A was a 70% solution of tetrabutylphosphonium acetate•acetic acid complex in methanol.
CATALYST B was a 30% solution of tetrabutylphosphonium acetate•acetic acid complex in methanol containing a stoichiometric amount of ortho phosphoric acid.
CATALYST C was a 35% solution of tetrabutylphosphonium acetate•acetic acid complex in methanol containing a stoichiometric amount of fluoroboric acid.
CATALYST D was a 33.5% solution of tributylamine in methanol containing a stoichiometric amount of fluoroboric acid.
CATALYST E was a 35% solution of N,N'-dimethyl-1,2-diaminoethane•tetrafluoroboric acid complex in methanol.
STABILIZER A was methyl-p-toluene sulfonate.
STABILIZER B was p-toluene sulfonic acid•monhydrate.

The Tg was determined by Differential Scanning Calorimetry using a calibrated DuPont Instrument (Model No. 912 with a 1090 controller). Samples were run under a nitrogen atmosphere with a heat-up rate of 10 °C per min. (0.1667 °C/sec.).

The Izod impact was determined by ASTM D-256.

The melt viscosities were determined using a cone and plate viscometer available from ICI Research Equipment (London). Temperatures at which melt viscosities are measured are also temperatures at which the compositions are melt flowable. Temperatures at which melt flow takes place were also determined by using a hot plate having a known temperature gradient across the surface of the hot plate.

Fracture Toughness Measurement ($G_{IC}$)

The method for measuring $G_{IC}$ (fracture toughness or "critical strain energy release rate") is an adaptation of ASTM E-399 for plastics materials from the original usage with metals. The compact tension test is now widespread in usage and is described in the J. Mater. Sci., Vol. 16, 2657, 1981. An individual test piece is cut as an approximate 25.4 mm (1") square from a flat casting usually of 3.175 mm (1/8") thickness. A dovetail notch is cut into one edge, centered, about 6.25 mm (1/4") in depth. Next, a razor blade is inserted into this notch and tapped to produce a precrack. Two holes are then drilled adjacent to the dovetail as indicated in ASTM E-399 allowing the test piece to be pinned into position in the Instron test machine. Extension of the sample now allows the force required to propagate opening of the precrack to be measured, using a test speed of 0.0085 mm/sec. (0.02 inches/ minute). This force is used in the equation given in ASTM E-399, along with the required sample dimensions and actual precrack length, to calculate a "stress intensification factor" $K_Q$. This is then combined with the tensile modulus (in those instances where the tensile modulus was not measured, a value of 2068 MPa (300,000 psi) was used) and Poisson's ratio for the material to give the value for $G_{IC}$, usually reported in ergs/cm$^2$ x 10$^6$ (kJ/m$^2$). A scale comparing typical values for $G_{IC}$ for various plastics and metals is given in reference Lee, L.H., "Physico-chemical Aspects of Polymer Surfaces", K. L. Mittal, ed. Plenum Press, New York, N.Y., 1983.

GENERAL PROCEDURE FOR EXAMPLES 1 THROUGH 43

A mixture of epoxy resin, extender compound, suitable epoxy curing agent and catalyst was mixed at the indicated temperature. After thorough mixing, the mixture was degassed by evacuating the mixture to a pressure of 0.13 kPa (1 mm Hg). At this stage, the viscosity of the partially advanced epoxy resin was at least 20% greater than the viscosity of the initial mixture. The partially advanced epoxy resin was melt flowable at 150 °C. The resultant degassed mixture was then poured into a mold consisting of two 203 mm X 203 mm (8 in. X 8 in.) polished aluminum plates separated by a 3.175 mm (1/8 inch) silicone rubber gasket. The cast mixture was allowed to cure at elevated temperature after which the resultant cured, cast sheet was demolded and cut into various test samples for testing. The components, mixing temperature, curing temperature and test results are given in the following Table I.

TABLE I

| COMPONENTS CONDITIONS AND PROPERTIES | EXAMPLE NUMBER 1 | 2 | 3 | 4 | 5 | 6 |
|---|---|---|---|---|---|---|
| EPOXY RESIN, TYPE/pbw[1] | A/35 | A/35 | A/35 | A/35 | B/35 | B/35 |
| , equiv. | 0.19 | 0.19 | 0.19 | 0.19 | 0.181 | 0.181 |
| EXTENDER COMPOUND, TYPE/pbw[1] | A/38.7 | A/25.8 | A/12.9 | A/7.74 | C/16.94 | C/11.29 |
| , equiv. | 0.142 | 0.095 | 0.047 | 0.029 | 0.136 | 0.09 |
| CATALYST, TYPE/ml | A/0.1 | A/0.1 | A/0.1 | A/0.1 | A/0.1 | A/0.1 |
| CURING AGENT, TYPE/pbw[1] | A/1.73 | A/3.47 | A/5.2 | A/5.89 | A/1.65 | A/3.3 |
| , equiv. | 0.04 | 0.081 | 0.121 | 0.137 | 0.038 | 0.077 |
| RATIO[2] | 0.75/0.21 | 0.5/0.425 | 0.25/0.637 | 0.15/0.721 | 0.75/0.21 | 0.5/0.425 |
| MIXING AND DEGASSING TEMPERATURE, °C | 130-140 | 130-140 | 130-140 | 130-140 | 130-140 | 130-140 |
| CURING CONDITIONS °C/sec | 140/57600<br>200/7200<br>225/7200 | 140/57600<br>200/7200<br>225/7200 | 140/57600<br>200/7200<br>225/7200 | 140/57600<br>200/7200<br>225/7200 | 150/57600<br>200/7200<br>225/7200 | 150/57600<br>200/7200<br>225/7200 |
| Tg, °C | 133 | 138 | 154 | 165 | 171 | 186 |
| $G_{IC}$, kJ/m² | 2.0 | 1.09 | 0.62 | 0.35 | 0.57 | 0.58 |
| IZOD IMPACT (ft. lbs/in. of notch) | (1.41) | (1.39) | N.D.[3] | N.D.[3] | N.D.[3] | (1.37) |
| J/cm of notch | 0.75 | 0.74 | | | | 0.73 |

[1]Parts by weight

[2]Equivalent ratios of extender/curing agent per equivalent of epoxy

[3]Not determined

TABLE I (cont.)

| COMPONENTS CONDITIONS AND PROPERTIES | EXAMPLE NUMBER 7 | 8 | 9 | 10 | 11 | 12 |
|---|---|---|---|---|---|---|
| EPOXY RESIN, TYPE/pbw[1] | B/35 | C/35 | C/35 | C/35 | D/35 | D/35 |
| , equiv. | 0.181 | 0.195 | 0.195 | 0.195 | 0.211 | 0.211 |
| EXTENDER COMPOUND, TYPE/pbw[1] | C/5.65 | A/39.73 | A/26.49 | A/13.24 | A/43.01 | A/28.67 |
| , equiv. | 0.045 | 0.146 | 0.097 | 0.049 | 0.158 | 0.105 |
| CATALYST, TYPE/ml | A/0.1 | A/0.1 | A/0.1 | A/0.1 | A/0.1 | A/0.1 |
| CURING AGENT, TYPE/pbw[1] | A/4.95 | A/1.78 | A/3.56 | A/5.34 | A/1.93 | A/3.85 |
| , equiv. | 0.115 | 0.041 | 0.083 | 0.124 | 0.045 | 0.09 |
| RATIO[2] | 0.25/0.636 | 0.75/0.21 | 0.50/0.425 | 0.25/0.636 | 0.749/0.213 | 0.498/0.426 |
| MIXING AND DEGASSING TEMPERATURE, °C | 130-140 | 140-150 | 140-150 | 140-150 | 150 | 150 |
| CURING CONDITIONS °C/sec | 150/57600<br>200/7200<br>225/7200 | 150/57600<br>200/7200<br>225/7200 | 150/57600<br>200/7200<br>225/7200 | 150/57600<br>200/7200<br>225/7200 | 150/57600<br>200/7200<br>225/7200 | 150/57600<br>200/7200<br>225/7200 |
| Tg, °C | 214 | 151 | 162 | 189 | 194 | 214 |
| $G_{IC}$, kJ/m² | 0.29 | 0.51 | 0.29 | 0.2 | 0.33 | 0.26 |
| IZOD IMPACT (ft. lbs/in. of notch) J/cm of notch | N.D.[3] | (0.79)<br>0.42 | N.D.[3] | N.D.[3] | N.D.[3] | N.D.[3] |

[1]Parts by weight

[2]Equivalent ratios of extender/curing agent per equivalent of epoxy

[3]Not determined

TABLE I (cont.)

| COMPONENTS CONDITIONS AND PROPERTIES | EXAMPLE NUMBER 13 | 14 | 15 | 16 | 17 | 18 |
|---|---|---|---|---|---|---|
| EPOXY RESIN, TYPE/pbw[1] | D/35 | E/25 | E/25 | E/25 | D/30 | D/35 |
| , equiv. | 0.211 | 0.14 | 0.14 | 0.14 | 0.181 | 0.211 |
| EXTENDER COMPOUND, TYPE/pbw[1] | A/14.34 | B/11.62 | B/7.75 | B/3.75 | B/14.77 | B/9.85 |
| , equiv. | 0.053 | 0.109 | 0.072 | 0.035 | 0.138 | 0.092 |
| CATALYST, TYPE/ml | A/0.1 | A/0.1 | A/0.1 | A/0.1 | A/0.1 | A/0.1 |
| CURING AGENT, TYPE/pbw[1] | A/5.78 | A/1.32 | A/2.64 | A/3.85 | A/1.68 | A/3.36 |
| , equiv. | 0.134 | 0.031 | 0.061 | 0.09 | 0.0391 | 0.078 |
| RATIO[2] | 0.25/0.635 | 0.779/0.221 | 0.51/0.436 | 0.25/0.643 | 0.75/0.212 | 0.5/0.424 |
| MIXING AND DEGASSING TEMPERATURE, °C | 140-150 | 130-140 | 130-140 | 130-140 | 150 | 150 |
| CURING CONDITIONS °C/sec | 150/57600<br>200/7200<br>225/7200 | 150/57600<br>200/7200<br>225/7200 | 150/57600<br>200/7200<br>225/7200 | 150/57600<br>200/7200<br>225/7200 | 150/57600<br>200/7200<br>225/7200 | 150/57600<br>200/7200<br>225/7200 |
| Tg, °C | >250 | 143.9 | 160 | 169.5 | 206 | >254 |
| $G_{IC}$, kJ/m² | 0.15 | 7.15 | 1.5 | 1.16 | 0.34 | 0.28 |
| IZOD IMPACT (ft. lbs/in. of notch) | N.D.[3] | N.D.[3] | N.D.[3] | (0.76) | N.D.[3] | (0.2 ) |
| J/cm of notch | | | | 0.41 | | 0.1 |

[1]Parts by weight

[2]Equivalent ratios of extender/curing agent per equivalent of epoxy

[3]Not determined

TABLE I (cont.)

| COMPONENTS CONDITIONS AND PROPERTIES | EXAMPLE NUMBER 19 | 20 | 21 | 22 |
|---|---|---|---|---|
| EPOXY RESIN, TYPE/pbw[1] | D/30 | F/30 | F/30 | F/35 |
| , equiv. | 0.181 | 0.089 | 0.089 | 0.104 |
| EXTENDER COMPOUND, TYPE/pbw[1] | B/4.92 | A/18.2 | A/12.1 | A/7.08 |
| , equiv. | 0.046 | 0.067 | 0.045 | 0.026 |
| CATALYST, TYPE/ml | A/0.1 | A/0.1 | A/0.1 | A/0.1 |
| CURING AGENT, TYPE/pbw[1] | A/5.04 | A/0.82 | A/1.63 | A/2.86 |
| , equiv. | 0.117 | 0.019 | 0.038 | 0.066 |
| RATIO[2] | 0.254/0.646 | 0.753/0.214 | 0.5/0.427 | 0.25/0.635 |
| MIXING AND DEGASSING TEMPERATURE, °C | 150 | 150 | 150 | 150 |
| CURING CONDITIONS °C/sec | 150/57600<br>200/7200<br>225/7200 | 150/57600<br>200/7200<br>225/7200 | 150/57600<br>200/7200<br>225/7200 | 150/57600<br>200/7200<br>225/7200 |
| Tg, °C | >260 | 156 | 159 | 170 |
| $G_{IC}$, kJ/m² | 0.2 | 2.33 | 1.15 | 0.56 |
| IZOD IMPACT (ft. lbs/in. of notch) | N.D.[3] | (0.61) | (0.72) | (0.76) |
| J/cm of notch | | 0.33 | 0.38 | 0.41 |

[1]Parts by weight

[2]Equivalent ratios of extender/curing agent per equivalent of epoxy

[3]Not determined

TABLE I (cont.)

| COMPONENTS CONDITIONS AND PROPERTIES | EXAMPLE NUMBER 23 | 24 | 25 |
|---|---|---|---|
| EPOXY RESIN, TYPE/pbw[1] | F/30 | F/30 | F/35 |
| , equiv. | 0.089 | 0.089 | 0.104 |
| EXTENDER COMPOUND, TYPE/pbw[1] | D/1.87 | B/4.78 | E/3.33 |
| , equiv. | 0.044 | 0.0447 | 0.052 |
| CATALYST, TYPE/ml | A/0.1 | A/0.1 | A/0.1 |
| CURING AGENT, TYPE/pbw[1] | A/1.63 | A/1.63 | A/3.33 |
| , equiv. | 0.038 | 0.038 | 0.044 |
| RATIO[2] | 0.5/0.426 | 0.5/0.426 | 0.5/0.425 |
| MIXING AND DEGASSING TEMPERATURE, °C | 150 | 150 | 140-150 |
| CURING CONDITIONS °C/sec | 150/57600<br>200/7200<br>--- | 150/57600<br>200/7200<br>--- | 150/57600<br>200/7200<br>--- |
| Tg, °C | 164 | 162.1 | 160.8 |
| $G_{IC}$, kJ/m² | 0.65 | 1.47 | 0.93 |
| IZOD IMPACT (ft. lbs/in. of notch) J/cm of notch | N.D.[3] | N.D.[3] | N.D.[3] |

[1]Parts by weight

[2]Equivalent ratios of extender/curing agent per equivalent of epoxy

[3]Not determined

TABLE I (cont.)

| COMPONENTS CONDITIONS AND PROPERTIES | EXAMPLE NUMBER 26 | 27 | 28 | 29 | 30 |
|---|---|---|---|---|---|
| EPOXY RESIN, TYPE/pbw[1] | H/49.34 | K/25 | I/181.3 | I/45.3 | A/25 |
| , equiv. | 0.20 | 0.102 | 1.0 | 0.25 | 0.136 |
| EXTENDER COMPOUND, TYPE/pbw[1] | A/27.20 | G/9.3 | F/71.0 | H/16.9 | I/17.95 |
| , equiv. | 0.10 | 0.051 | 0.50 | 0.125 | 0.068 |
| CATALYST, TYPE/ml | A/0.11 | A/0.11 | A/1.08 | C/0.24 | A/0.12 |
| CURING AGENT, TYPE/pbw[1] | A/4.3 | A/1.86 | A/21.5 | A/5.37 | A/2.48 |
| , equiv. | 0.10 | 0.044 | 0.5 | 0.125 | 0.058 |
| RATIO[2] | 0.50/0.50 | 0.5/0.425 | 0.5/0.5 | 0.50/0.50 | 0.05/0.425 |
| MIXING AND DEGASSING TEMPERATURE, °C | 140-150 | 140-150 | 140-150 | 140-150 | 140-150 |
| CURING CONDITIONS °C/sec | 150/57600<br>200/7200<br>--- | 150/57600<br>200/7200<br>--- | 150/57600<br>200/7200<br>--- | 150/57600<br>200/7200<br>--- | 150/57600<br>200/7200<br>--- |
| Tg, °C | 174.9 | 141.4 | 114.3 | 139.1 | 121.2 |
| $G_{IC}$, kJ/m² | N.D.[3] | 0.32 | N.D.[3] | 0.62 | 1.26 |
| IZOD IMPACT (ft. lbs/in. of notch) J/cm of notch | N.D.[3] | N.D.[3] | N.D.[3] | N.D.[3] | N.D.[3] |

[1]Parts by weight

[2]Equivalent ratios of extender/curing agent per equivalent of epoxy

[3]Not determined

**TABLE I (cont.)**

| COMPONENTS CONDITIONS AND PROPERTIES | EXAMPLE NUMBER 31 | 32 | 33 |
|---|---|---|---|
| EPOXY RESIN, TYPE/pbw[1] , equiv. | J/25 0.076 | F/25 0.074 | A/67.95 0.368 |
| EXTENDER COMPOUND, TYPE/pbw[1] , equiv. | I/10.1 0.038 | J/7.47 0.037 | A/51.0 0.187 |
| CATALYST, TYPE/ml | A/0.10 | A/0.1 | None |
| CURING AGENT, TYPE/pbw[1] , equiv. | A/1.36 0.032 | A/1.35 0.031 | A/2.0+B/4.0 0.046 0.14 |
| RATIO[2] | 0.50/0.425 | 0.50/0.425 | 0. 0.50/0.125/ 0.375 |
| MIXING AND DEGASSING TEMPERATURE, °C | 140-150 | 140-150 | 120-130 |
| CURING CONDITIONS °C/sec | 150/57600 200/7200 --- | 150/57600 200/7200 --- | 150/14400 200/10800 --- |
| Tg, °C | 121 | N.D.[3] | 138.5 |
| $G_{IC}$, $kJ/m^2$ | 1.26 | 0.67 | N.D.[3] |
| IZOD IMPACT (ft. lbs/in. of notch) J/cm of notch | N.D.[3] | N.D.[3] | N.D.[3] |

[1]Parts by weight

[2]Equivalent ratios of extender/curing agent per equivalent of epoxy

[3]Not determined

**TABLE I (cont.)**

| COMPONENTS CONDITIONS AND PROPERTIES | EXAMPLE NUMBER 34 | 35 |
|---|---|---|
| EPOXY RESIN, TYPE/pbw[1] | I/45.3 | I/67.95 |
| , equiv. | 0.25 | 0.375 |
| EXTENDER COMPOUND, TYPE/pbw[1] | A/51.0 | A/51.0 |
| , equiv. | 0.187 | 0.187 |
| CATALYST, TYPE/ml | B/0.63 | D/0.21 |
| CURING AGENT, TYPE/pbw[1] | A/2.29 | A/8.05 |
| , equiv. | 0.053 | 0.187 |
| RATIO[2] | 0.75/0.21 | 0.50/0.50 |
| MIXING AND DEGASSING TEMPERATURE, °C | 140-150 | 140-150 |
| CURING CONDITIONS °C/sec | 150/57600<br>200/7200<br>--- | 150/14400<br>200/10800<br>--- |
| Tg, °C | 129.9 | 131.3 |
| $G_{IC}$, kJ/m² | 1.0 | 1.0 |
| IZOD IMPACT (ft. lbs/in. of notch) J/cm of notch | N.D.[3] | N.D.[3] |

[1]Parts by weight

[2]Equivalent ratios of extender/curing agent per equivalent of epoxy

[3]Not determined

**TABLE I (cont.)**

| COMPONENTS CONDITIONS AND PROPERTIES | EXAMPLE NUMBER 36 | 37 | 38 |
|---|---|---|---|
| EPOXY RESIN, TYPE/pbw[1]<br>, equiv. | L/53.44<br>0.296 | L/45.71<br>0.253 | L/52.95<br>0.293 |
| EXTENDER COMPOUND, TYPE/pbw[1]<br>, equiv. | A/40.20<br>0.148 | A/51.57<br>0.190 | A/39.82<br>0.146 |
| CATALYST, TYPE/ml | A/0.12 | A/0.12 | E/0.18 |
| CURING AGENT, TYPE/pbw[1]<br>, equiv. | A/6.35<br>0.148 | A/2.72<br>0.063 | A/6.30<br>0.147 |
| RATIO[2] | 0.50/0.50 | 0.75/0.25 | 0.50/0.50 |
| MIXING AND DEGASSING TEMPERATURE, °C | 150 | 150 | 150 |
| CURING CONDITIONS °C/sec | 150/57600<br>200/7200<br>--- | 150/57600<br>200/7200<br>--- | 150/57600<br>200/7200<br>--- |
| Tg, °C | 141.4 | 126.7 | N.D.[3] |
| $G_{IC}$, kJ/m² | 1.51 | 1.62 | 0.64 |
| IZOD IMPACT<br>(ft. lbs/in. of notch)<br>J/cm of notch | N.D.[3] | N.D.[3] | N.D.[3] |

[1]Parts by weight

[2]Equivalent ratios of extender/curing agent per equivalent of epoxy

[3]Not determined

EXAMPLE 39

Epoxy Resin I, 2719.5 grams (15.0 equivalents), and Extender Compound A, 3060.0 grams (11.25 equivalents) were heated with stirring under a nitrogen atmosphere to 150°C until homogeneous, then 137.1 grams of Curing Agent A was added. After stirring until homogeneous, the mixture was cooled to 78°C and 16.2 ml of Catalyst C was added and the resin was stored at 10°C. The resin melt viscosity measured at 100°C had increased from 0.080 Pa•s (80 cps) to 0.220 Pa•s (220 cps) an increase in melt viscosity of 175 percent.

EXAMPLE 40

The resin from Example 44, 120.0 grams was cured for 4 hours (14400 s) at 150°C, followed by 3 hours (10800 s) at 200°C. The cured casting had a glass transition temperature (Tg) of 125.6°C with a $G_{IC}$ value of 1.22 KJ/m$^2$.

EXAMPLE 41

Epoxy Resin L, 180.8 grams (1.0 equivalent), Extender Compound A, 136.0 grams (0.50 equivalent) and 4.3 grams (0.10 equivalent) of Curing Agent A were heated with stirring under a nitrogen atmosphere at 120 °C until the melt viscosity measured at 100 °C had increased from 0.080 to 0.200 Pa•s (80 cps to 200 cps), an increase in melt viscosity of 150 percent. Then 0.19 ml of Stabilizer A was added. After 5 minutes (300 s) stirring, the homogeneous mixture was cooled to 70 °C, 2.16 ml of Catalyst C added, and the resin cooled to ambient temperature.

EXAMPLE 42

A portion of the resin from Example 41, 714.8 grams was mixed at 130 °C with 47.0 grams, 0.76 equivalents of Curing Agent C until homogeneous, then cured for 4 hours (14400 s) at 150 °C followed by 3 hours (10800 s) at 200 °C. The cured casting had a glass transition temperature of 134.9 °C and a $G_{IC}$ value of 0.61 $KJ/m^2$.

EXAMPLE 43

Epoxy Resin L, 1012.5 grams (5.6 equivalents), 761.6 grams (2.8 equivalents) of Extender A, and 24.08 g (0.56 equivalent) of Curing Agent A were heated with stirring under a nitrogen atmosphere at 120 °C until the melt viscosity measured at 100 °C had increased from 80 cps to 200 cps (0.080 to 0.200 Pa•s), an increase in melt viscosity of 150 percent. Then 1.06 grams (5.6 meqs.) of Stabilizer B was added. After 5 minutes (300 s) at 120 °C, the homogeneous mixture was cooled to 70 °C, 12.1 ml (11.2 meqs.) of Catalyst C added, and the resin cooled to ambient.

EXAMPLE 44

A portion of the resin from Example 50, 731.9 grams was mixed at 130 °C with 48.06 grams, 0.78 equivalent, of Curing Agent C until homogeneous, then cured for 4 hours (14400 s) at 150 °C followed by 3 hours (10800 s) at 200 °C. The cured casting had a glass transition temperature of 137.3 and a $G_{IC}$ value of 0.72 $kJ/m^2$

EXAMPLE 45

Resin I, 9.06 grams, 6.80 grams of Extender A, and 0.27 gram of Curing Agent A were heated with stirring to 150 °C until homogeneous. Multiple batches of this formulation were stored at the temperatures indicated in Table II and the change in melt viscosity with time measured in cps (Pa•s) at 125 °C.

EXAMPLE 46

Resin I, 9.06 grams, 6.80 grams of Extender A, and 0.27 gram of Curing Agent A were heated with stirring to 150 °C until homogeneous. Then 0.009 ml of Stabilizer A was added. Multiple batches of this formulation were stored at the temperature indicated in Table II and the change in melt viscosity with time measured in cps (Pa•s) at 125 °C.

EXAMPLE 47

Example 41 was repeated, except that Catalyst C was not added. The change in melt viscosity with time measured in cps (Pa•s) at 125 °C is shown in Table II compared to Example 41.

**TABLE II**

| Ambient Temp. (~23°C) | Example 45 | Example 46 | Example 47 | Example 41 |
|---|---|---|---|---|
| Initial | 40 (0.040) | 40 (0.040) | 200 (0.200) | 200 (0.200) |
| 5 weeks | N.D.* | N.D. | 245 (0.245) | 200 (0.200) |
| 9 weeks | 80 (0.080) | 65 (0.060) | N.D. | N.D. |
| 13 weeks | N.D. | N.D. | N.D. | 235 (0.235) |
| 52°C Storage | | | | |
| Initial | 40 (0.040) | 40 (0.040) | 200 (0.200) | 200 (0.200) |
| 10 days | N.D. | N.D. | 400 (0.400) | 260 (0.260) |
| 11 days | 110 (0.110) | 65 (0.065) | N.D. | N.D. |
| 23 days | 210 (0.210) | 95 (0.095) | 590 (0.590) | 355 (0.355) |
| 5 weeks | 500 (0.500) | 165 (0.165) | >1,000 (>1.000) | 710 (0.710) |
| 70°C Storage | | | | |
| Initial | 40 (0.040) | 40 (0.040) | N.D. | N.D. |
| 3 hours | 40 (0.040) | 40 (0.040) | N.D. | N.D. |
| 4½ hours | 50 (0.050) | 50 (0.050) | N.D. | N.D. |
| 24 hours | 60 (0.060) | 55 (0.055) | N.D. | N.D. |
| 96 hours | 145 (0.145) | 80 (0.080) | N.D. | N.D. |

*N.D. = not determined

COMPARATIVE EXPERIMENT A

The exact amounts as described in Example 36 were reacted as follows: the epoxy resin, tetrabromobisphenol A, and 0.1 ml of the catalyst were mixed and allowed to react together at 150 °C for one hour (3600 s) then the curing agent and remainder of the catalyst were added, and a casting poured and cured as described in Example 36. The properties of the cured casting compared to Example 36 are shown in Table III.

COMPARATIVE EXPERIMENT B

The exact amounts as described in Example 37 were reacted as follows: the epoxy resin, tetrabromobisphenol A and 0.1 ml of catalyst were mixed and allowed to react together at 150 ° C for one hour (3600 s). Then the curing agent and the remainder of the catalyst were added, and a casting poured and cured as described in Example 37. The properties of the cured casting compared to Example 37 are shown in Table III.

TABLE III

| Cured Properties | Example 36 | Comp. Expt. A | Example 37 | Comp. Expt. B |
|---|---|---|---|---|
| Tg (° C) | 141.4 | 136.8 | 126.7 | 127.2 |
| $G_{IC}$ (KJ/m$^2$) | 1.51 | 1.10 | 1.62 | 1.06 |
| Izod impact (ft.16/in) unnotched | (14.3) | (9.7) | (34.8) | (20.5) |
| J/cm | 7.6 | 5.2 | 18.6 | 10.9 |
| Elongation (%) | (9.5) | 5.3 | 19.5 | 10.8 |
| Viscosity (cps @ 100 ° C) | (80) | (>4000) | (80) | (>4000) |
| Pa•s | 0.08 | >4 | 0.08 | >4 |

EXAMPLE 48

A high solids laminating varnish was prepared by reacting 181.5 grams (1.0 equivalent) of Epoxy Resin M, 95.2 grams (0.35 equivalent) of Extender Compound A, and 27.95 grams (0.65 equivalent) of Curing Agent A at 130 ° C for 25 minutes (1500 s). During this time, the melt viscosity measured at 100 ° C increased from 0.19 Pa•s (190 cps) to 0.75 Pa•s (750 cps), a 395 percent increase. The reaction mixture was then cooled, and 76.1 grams of methyl ethyl ketone slowly added. The final product was a homogenous, clear liquid with a viscosity at 25 ° C of 1.011 Pa•s (1,011 cps).

COMPARATIVE EXPERIMENT C

Example 48 was repeated, except the resin was not partially reacted before the solvent was added. After stirring for 16 hours (57,600 s) at 25 ° C, the mixture had not become homogenous. Even after 1-1/2 hours (5400 s) stirring at 60 ° C, followed by 1/2 hour (1800 s) stirring at 80 ° C (boiling point of the methyl ethyl ketone), the mixture contained large amounts of undissolved solid particles, making this formulation unsuitable as a laminating varnish.

**Claims**

**1.** A partially advanced solventless epoxy resin composition obtainable by reacting a composition comprising

(A) at least one relatively low equivalent weight epoxy resin having an average of more than one vicinal epoxy group per molecule;

(B) at least one extender material having an average of two active hydrogen atoms per molecule which are reactive with vicinal epoxy groups wherein (A) and (B) are present in quantities providing from 0.15 to 0.85 active hydrogen equivalent in component (B) per epoxide equivalent in component (A);

(C) one or more epoxy curing agents and optionally,

(D) one or more catalysts for promoting the reaction between components (A) and (B)

**characterized in that**

the one or more epoxy curing agents (C) comprises an aromatic sulfonic acid amide represented by the formula

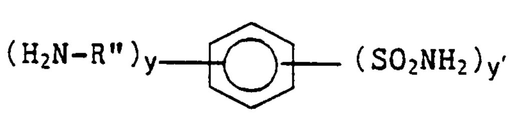

wherein each R" is independently a single bond or a divalent hydrocarbon group having from 1-4 carbon atoms, each y and y' independently have values from 1 to 3 and component (C) is present in an amount from 0.05 to 0.9 equivalent per epoxide equivalent of component (A) and the combined equivalents of components (B) and (C) per epoxide equivalent in component (A) are from 0.2:1 to 1.1:1 and component (D) is present in an amount from zero to 0.1 mole per epoxide equivalent of component (A) and wherein the composition has been reacted to the extent that the composition is melt flowable at or below 250 °C and the melt viscosity has increased to a value which is at least 20 percent greater than the initial mixture of components (A), (B), and (C) and, if present (D).

**2.** The composition of claim 1,
**characterized in that**
the components (A) , (B) and (C) are present in quantities providing from 0.15 to 0.85 active hydrogen equivalent in component (0) per epoxide equivalent of (A), from 0.05 to 0.75 equivalents of component (C) per epoxide equivalent of component (A) and from 0.2:1 to 1.05:1 of the combined equivalents of components (B) and (C) per epoxide equivalent of component (A) and component (D) is present from 0.00005 to 0.05 mole per epoxide equivalent of component (A).

**3.** The composition of claim 1,
**characterized in that**
the advancement reaction has taken place to the extent that results in a composition being melt flowable at or below 150 °C, and an increase of the melt viscosity to a value which is from 25 to 625 percent greater than the initial mixtures of the components (A), (B) and (C) and, if present, component (D).

**4.** The composition of any of claims 1 or 2,
**characterized in that**
the advancement reaction has taken place to the extent resulting in a composition being melt flowable between 75 ° and 150 °C and an increase of the melt viscosity to a value which is at least 1250 percent greater than the melt viscosity of the initial mixture of the components (A), (B) and (C) and, if present, component (D).

**5.** A curable composition which comprises the partially advanced epoxy resin compositions of any of claims 1 to 4 and at least one additional curing agent (E) so that the combined equivalents of components (B) , (C) and (E) per epoxide equivalent in component (A) is from 0.6:1 to 1.1:1.

**6.** A curable composition of claim 5 wherein said at least one additional curing agent (E) is selected from primary or secondary amimes, polyamides, mercaptans, carboxylic acids, carboxylic acid anhydrides, guanidines, biguanides, polyfunctional phenolic compounds and mixtures thereof.

**7.** A process for preparing a partially advanced solventless epoxy resin composition by reacting a composition comprising

(A) at least one relatively low equivalent weight epoxy resin having an average of more than one vicinal epoxy group per molecule;

(B) at least one extender material having an average of two active hydrogen atoms per molecule which are reactive with vicinal epoxy groups wherein (A) and (B) are present in quantities providing from 0.15 to 0.85 active hydrogen equivalent in component (B) per epoxide equivalent in component (A);

(C) one or more epoxy curing agents; and optionally

(D) one or more catalysts for promoting the reaction between components (A) and (B),

**characterized in that**
the one or more epoxy curing agents (C) comprises an aromatic sulfonic acid amide represented by the formula

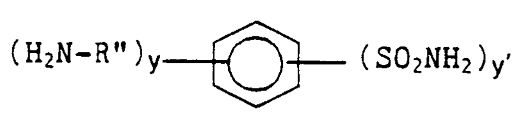

wherein each R" is independently a single bond or a divalent hydrocarbon group having from 1-4 carbon atoms, each y and y' independently have values from 1 to 3 and is employed in an amount from 0.05 to 0.9 equivalent per epoxide equivalent of component (A) and the combined equivalents of components (B) and (C) per epoxide equivalent in component (A) are from 0.2:1 to 1.1:1 and component (D) is present in an amount from zero to 0.1 mole per epoxide equivalent of component (A) and wherein the composition is reacted in the absence of a solvent to the extent that said composition is melt flowable at or below 250 ° C and the melt viscosity has increased to a value which is at least 20 percent greater than the initial mixture of components (A), (B) and (C) and (D) , if present.

**8.** The process of claim 7,
**characterized by**
using components (A), (B) and (C) in amounts providing from 0.15 to 0.75 active hydrogen equivalent in component (B) per epoxide equivalent of (A), from 0.05 to 0.75 equivalents of component (C) per epoxide equivalent of component (A) and from 0.2:1 to 1.05:1 of the combined equivalents of components (B) and (C) per epoxide equivalent of component (A) and using component (D) in an amount from 0.00005 to 0.05 mole per epoxide equivalent of component (A).

**9.** The process of claim 7 or 8,
**characterized by**
partially advancing the epoxy resin to the extent that the resulting composition is melt flowable at or below 150 ° C and the melt viscosity has incresed to a value which is from 25 to 625 percent greater than the melt viscosity of the initial mixture.

**10.** The process of claims 7 or 8,
**characterized by**
partially advancing the epoxy resin to the extent that the melt viscosity of the resulting composition has increased to a value at least 1250 percent greater than the melt viscosity of the initial mixture.

**11.** Use of the compositions of claims 1 to 6 or prepared by any of caims 7 to 10 as curable compositions.

**12.** Use according to claim 11 for the preparation for laminates, composites, coatings, adhesives, castings, moldings, electronic encapsulations and potting compositions.

**13.** A process for preparing a cured product which comprises subjecting to curing conditions a composition according to any claims 1 to 6 or prepared by any of claims 7 to 10.

**Patentansprüche**

**1.** Lösemittelfreie Harzzusammensetzung eines teilweise weiterentwickelten Epoxyharzes, erhältlich durch Umsetzen einer Mischung, enthaltend
(A) mindestens ein Epoxyharz mit relativ niedrigem Äquivalentgewicht, das im Mittel mehr als eine benachbarte Epoxygruppe pro Molekül aufweist,
(B) mindestens ein Extendermaterial mit im Mittel zwei aktiven Wasserstoffatomen pro Molekül , die mit den benachbarten Epoxygruppen reagieren, wobei (A) und (B) in Mengen vorhanden sind, so daß sich von 0,15-0,85 aktive Wasserstoffäquivalente in Bestandteil (B) pro Epoxidäquivalent in Bestandteil (A) ergeben,
(C) ein oder mehrere Epoxyhärtungsmittel und gegebenenfalls
(D) einen oder mehrere Katalysatoren zum Unterstützen der Umsetzung zwischen den Bestandteilen (A) und (B),
**dadurch gekennzeichnet,**
daß das eine oder die mehreren Epoxyhärtungsmittel (C) ein aromatisches Sulfonsäureamid der Formel enthalten

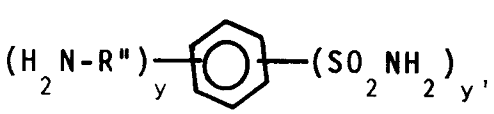 ,

in der R'' unabhängig eine einfache Bindung oder eine zweiwertige Kohlenwasserstoffgruppe mit 1-4 Kohlenstoffatomen ist, jedes y und y' unabhängig Werte von 1-3 aufweist und Bestandteil (C) in einer Menge von 0,05-0,9 Äquivalenten pro Epoxidäquivalent von Bestandteil (A) vorhanden ist und die kombinierten Äquivalente von Bestandteilen (B) und (C) pro Epoxidäquivalent in Bestandteil (A) von 0,2:1-1,1:1 betragen und Bestandteil (D) in einer Menge von Null bis 0,1 Mol pro Epoxidäquivalent von Bestandteil (A) vorhanden ist und wobei die Mischung bis zu einem solchen Ausmaß umgesetzt wurde, daß sie bei 250°C oder darunter schmelzfließfähig ist und die Schmelzviskosität auf einen Wert angestiegen ist, der mindestens 20% größer ist als der der Ausgangsmischung der Bestandteile (A), (B) und (C) und, falls vorhanden, (D).

**2.** Zusammensetzung nach Anspruch 1,
**dadurch gekennzeichnet,**
daß die Bestandteile (A) , (B) und (C) in Mengen vorhanden sind, daß sie 0,15-0,85 aktive Wasserstoffäquivalente in Bestandtiel (B) pro Epoxidäquivalent von (A), 0,05-0.75, Äquivalente von Bestandteil (C) pro Epoxidäquivalent von Bestandteil (A) und von 0,2:1-1,05:1 der kombinierten Äquivalente von Bestandteilen (B) und (C) pro Epoxidäquivalent von Bestandteil (A) ergeben und Bestandteil (D) in einer Menge von 0,00005-0,05 Mol pro Epoxidäquivalent von Bestandteil (A) vorhanden ist.

**3.** Zusammensetzung nach Anspruch 1,
**dadurch gekennzeichnet,**
daß die Weiterentwicklungsreaktion bis zu einem solchen Ausmaß abgelaufen ist, daß eine bei 150°C oder darunter schmelzfließfähige Mischung entstanden ist und die Schmelzviskosität auf einen Wert angestiegen ist, der um 25-625% größer ist als der der Ausgangsmischung der Bestandteile (A), (B) und (C ) und, falls vorhanden, (D).

**4.** Zusammensetzung nach Anspruch 1 oder 2,
**dadurch gekennzeichnet,**
daß die Weiterentwicklungsreaktion bis zu einem solchen Ausmaß abgelaufen ist, daß eine zwischen 75°C und 150°C schmelzfließfähige Mischung entstanden ist und die Schmelzviskosität auf einen Wert angestiegen ist, der um mindestens 1250% größer ist als der der Ausgangsmischung der Bestandteile (A), (B und (C) und, falls vorhanden, (D).

**5.** Härtbare Zusammensetzung, enthaltend die Harzzusammensetzungen eines teilweise weiterentwickelten Epoxyharzes nach jedem der Ansprüche 1-4 und mindestens ein weiteres Härtungsmittel (E), so daß die kombinierten Äquivalente von Bestandteilen (B), (C) und (E) pro Epoxidäquivalent in Bestandteil (A) von 0,6:1-1,1:1 betragen.

**6.** Härtbare Zusammensetzung nach Anspruch 5,
**dadurch gekennzeichnet,**
daß das mindestens eine weitere Härtungsmittel (E) ausgewählt ist aus primären und sekundären Aminen, Polyamiden, Mercaptanen, Carbonsäuren, Carbonsäureanhydriden, Guanidinen, Diguaniden, polyfunktionellen phenolischen Verbindungen und Mischungen derselben.

**7.** Verfahren zum Herstellen einer lösemittelfreien Harzzusammensetzung eines teilweise weiterentwickelten Epoxyharzes durch Umsetzen einer Mischung, enthaltend
(A) mindestens ein Epoxyharz mit relativ niedrigem Äquivalentgewicht, das im Mittel mehr als eine benachbarte Epoxygruppe pro Molekül aufweist,
(B) mindestens ein Extendermaterial mit im Mittel zwei aktiven Wasserstoffatomen pro Molekül, die mit den benachbarten Epoxygruppen reagieren, wobei (A) und (B) in Mengen vorhanden sind, so daß sich von 0,15-0,85 aktive Wasserstoffäquivalente in Bestandteil (B) pro Epoxidäquivalent in Bestandteil (A) ergeben,
(C) ein oder mehrere Epoxyhärtungsmittel und gegebenenfalls
(D) einen oder mehrere Katalysatoren zum Unterstützen der Umsetzung zwischen den Bestandteilen (A) und (B),
**dadurch gekennzeichnet,**
daß das eine oder die mehreren Epoxyhärtungsmittel (C) ein aromatisches Sulfonsäureamid der Formel enthalten

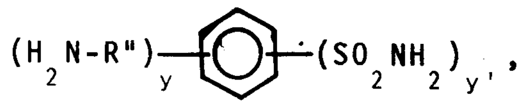

in der R" unabhängig eine einfache Bindung oder eine zweiwertige Kohlenwasserstoffgruppe mit 1-4 Kohlenstoffatomen ist, jedes y und y' unabhängig Werte von 1-3 aufweist und verwendet werden in einer Menge von 0,05-0,9 Äquivalenten pro Epoxidäquivalent von Bestandteil (A) und die kombinierten Äquivalente von Bestandteilen (B) und (C) pro Epoxidäquivalent in Bestandteil (A) von 0,2:1-1,1:1 betragen und Bestandteil (D) in einer Menge von Null bis 0,1 Mol pro Epoxidäquivalent von Bestandteil (A) vorhanden ist und wobei die Mischung in Abwesenheit eines Lösemittels bis zu einem solchen Ausmaß umgesetzt wird, daß sie bei 250 ° C oder darunter schmelzfließfähig ist und die Schmelzviskosität auf einen Wert angestiegen ist, der mindestens 20% größer ist als der der Ausgangsmischung der Bestandteile (A), (B) und (C) und, falls vorhanden, (D).

**8.** Verfahren nach Anspruch 7,
**gekennzeichnet durch**
Verwenden von Bestandteilen (A), (B) und (C) in Mengen, daß sich 0,15-0,75 aktive Wasserstoffäquivalente in Bestandtiel (B) pro Epoxidäquivalent von (A), 0,05-0.75 Äquivalente von Bestandteil (C) pro Epoxidäquivalent von Bestandteil (A) und 0,2:1-1,05:1 der kombinierten Äquivalente von Bestandteilen (B) und (C) pro Epoxidäquivalent von Bestandteil (A) ergeben, und Verwenden von Bestandteil (D) in einer Menge von 0,00005-0,05 Mol pro Epoxidäquivalent von Bestandteil (A).

**9.** Verfahren nach Anspruch 7 oder 8,
**gekennzeichnet durch**
teilweises Weiterentwickeln des Epoxyharzes bis zu einem solchen Ausmaß, daß eine bei 150 ° C oder darunter schmelzfließfähige Mischung entstanden ist und die Schmelzviskosität auf einen Wert angestiegen ist, der um 25-625% größer ist als die Schmelzviskosität der Ausgangsmischung.

**10.** Verfahren nach Ansprüchen 7 oder 8,
**gekennzeichnet durch**
teilweises Weiterentwickeln des Epoxyharzes bis zu einem solchen Ausmaß, daß die Schmelzviskosität der erhaltenen Mischung auf einen Wert angestiegen ist, der um mindestens 1250% größer ist als die Schmelzviskosität der Ausgangsmischung.

**11.** Verwendung der Zusammensetzungen nach Ansprüchen 1-6 oder hergestellt nach jedem der Ansprüche 7-10 als härtbare Zusammensetzungen.

**12.** Verwendung nach Anspruch 11 zur Herstellung von Laminaten, Verbundwerkstoffen, Beschichtungen, Klebstoffen, Gießmassen, Formmassen, elektronischen Verkapselungen und Einbettmassen.

**13.** Verfahren zum Herstellen eines gehärteten Produktes durch Aussetzen einer Zusammensetzung nach jedem der Ansprüche 1-6 oder hergestellt nach jedem der Ansprüche 7-10 Härtungsbedingungen.

**Revendications**

**1.** Composition de résine époxy exempte de solvant, partiellement développée, que l'on peut obtenir en faisant réagir une composition comprenant :

(A) au moins une résine époxy de masse par équivalent relativement faible, ayant en moyenne plus d'un groupe époxy vicinal par molécule,

(B) au moins un produit de développement, ayant en moyenne deux atomes d'hydrogène actif par molécule, qui sont aptes à réagir avec des groupes époxy vicinaux, les constituants (A) et (B) étant présents en des quantités qui fournissent de 0,15 à 0,85 équivalent d'hydrogène actif du constituant (B) par équivalent d'époxyde du constituant (A),

(C) un ou plusieurs agents de durcissement de résine époxy et, éventuellement,

(D) un ou plusieurs catalyseurs pour faciliter la réaction entre les constituants (A) et (B),

**caractérisée** en ce que le ou les agents de durcissement de résine époxy (C) comprend (comprennent) un amide d'acide sulfonique aromatique, représenté par la formule :

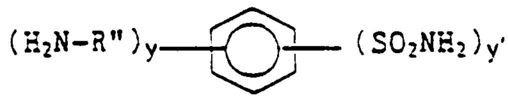

dans laquelle chaque R" représente, indépendamment, une liaison simple ou un groupe hydrocarboné divalent, ayant de 1 à 4 atomes de carbone, y et y' ont chacun, indépendamment, une valeur de 1 à 3, le constituant (C) est présent en une quantité de 0,05 à 0,9 équivalent par équivalent d'époxyde du constituant (A), les équivalents combinés de constituants (B) et (C) par équivalent d'époxyde du constituant (A) sont de 0,2:1 à 1,1:1 et le constituant (D) est présent en une quantité de 0 à 0,1 mole par équivalent d'époxyde du constituant (A), et en ce que l'on fait réagir la composition jusqu'à un point tel que la composition est apte à s'écouler à l'état fondu à une température inférieure ou égale à 250 °C et la viscosité à l'état fondu s'est élevée jusqu'à une valeur qui est supérieure de 20 % au moins à celle du mélange initial des constituants (A), (B) et (C) et, s'il est présent, (D).

**2.** Composition selon la revendication 1, caractérisée en ce que les constituants (A), (B) et (C) sont présents en des quantités fournissant de 0,15 à 0,85 équivalent d'hydrogène actif du constituant (B) par équivalent d'époxyde de (A), de 0,05 à 0,75 équivalent de constituant (C) par équivalent d'époxyde du constituant (A) et de 0,2:1 à 1,05:1 d'équivalents combinés des constituants (B) et (C) par équivalent d'époxyde de constituant (A), et en ce que le constituant (D) est présent en une quantité de 0,00005 à 0,05 mole par équivalent d'époxyde du constituant (A).

**3.** Composition selon la revendication 1, **caractérisée** en ce que la réaction de développement se déroule jusqu'à l'obtention d'une composition apte à s'écouler à l'état fondu à une température inférieure ou égale à 150 °C, et d'une élévation de la viscosité à l'état fondu jusqu'à une valeur qui est supérieure de 25 à 625 % à celle du mélange initial des constituants (A), (B) et (C) et, s'il est présent, (D).

**4.** Composition selon l'une quelconque des revendications 1 et 2, **caractérisée** en ce que la réaction de développement se déroule jusqu'à l'obtention d'une composition apte à s'écouler à l'état fondu à une température comprise entre 75 ° et 150 °C, et d'une élévation de la viscosité à l'état fondu jusqu'à une valeur qui est supérieure d'au moins 1250 % à la viscosité à l'état fondu du mélange initial des constituants (A), (B) et (C), et, s'il est présent, (D).

**5.** Composition durcissable, qui comprend la composition de résine époxy partiellement développée selon l'une quelconque des revendications 1 à 4 et au moins un agent de durcissement supplémentaire (E), les équivalents combinés des constituants (B), (C) et (E) par équivalent d'époxyde du constituant (A) étant de 0,6:1 à 1,1:1.

**6.** Composition durcissable selon la revendication 5, dans laquelle le ou les agents de durcissement supplémentaires (E) est (sont) choisi(s) parmi les amines primaires ou secondaires, les polyamides, les mercaptans, les acides carboryliques, les anhydrides d'acide carboxylique, les guanidines, les biguanides, les composés phénoliques polyfonctionnels et leurs mélanges.

**7.** Procédé de préparation d'une composition de résine époxy exempte de solvant, partiellement développée, par réaction d'une composition comprenant :

(A) au moins une résine époxy de masse par équivalent relativement faible, ayant en moyenne plus d'un groupe époxy vicinal par molécule,

(B) au moins un produit de développement, ayant en moyenne deux atomes d'hydrogène actif par molécule, qui sont aptes à réagir avec des groupes époxy vicinaux, les constituants (A) et (B) étant présents en des quantités fournissant de 0,15 à 0,85 équivalent d'hydrogène actif du constituant (a) par équivalent d'époxyde du constituant (A),

(C) un ou plusieurs agents de durcissement de résine époxy et, éventuellement,

(D) un ou plusieurs catalyseurs pour faciliter la réaction entre les constituants (A) et (B),

**caractérisé** en ce que le ou les agents de durcissement de résine époxy (C) comprend (comprennent) un amide d'acide sulfonique aromatique, représenté par la formule :

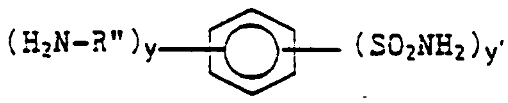

dans laquelle chaque R'' représente, indépendamment, une liaison unique ou un groupe hydrocarboné divalent, ayant de 1 à 4 atomes de carbone, y et y' ont chacun, indépendamment, une valeur de 1 à 3, et est (sont) employé(s) en une quantité de 0,05 à 0,9 équivalent par équivalent d'époxyde du constituant (A), les équivalents combinés des constituants (B) et (C) par équivalent d'époxyde du constituant (A) sont de 0,2:1 à 1,1:1 et le constituant (D) est présent en une quantité de 0 à 0,1 mole par équivalent d'époxyde du constituant (A), et en ce que l'on fait réagir la composition en l'absence de solvant, jusqu'à un point où ladite composition est apte à s'écouler à l'état fondu à une température inférieure ou égale à 250 ° C et où la viscosité à l'état fondu s'est élevée jusqu'à une valeur qui est supérieure d'au moins 20 % à celle du mélange initial des constituants (A), (B) et (C), et, s'il est présent, (D).

**8.** Procédé selon la revendication 7, **caractérisé** en ce que l'on utilise les constituants (A), (B) et (C) en des quantités fournissant de 0,15 à 0,75 équivalent d'hydrogène actif du constituant (B) par équivalent d'époxyde du constituant (A), de 0,05 à 0,75 équivalent du constituant (C) par équivalent d'époxyde du constituant (A) et de 0,2:1 à 1,05:1 des équivalents combinés des constituants (B) et (C) par équivalent d'époxyde du constituant (A), et en ce qu'on utilise le constituant (D) en une quantité de 0,00005 à 0,05 mole par équivalent d'époxyde de constituant (A).

**9.** Procédé selon la revendication 7 ou 8, **caractérisé** en ce qu'on développe partiellement la résine époxy jusqu'à un point où la composition résultante est apte à s'écouler à l'état fondu à une température inférieure ou égale à 150 ° C, et où la viscosité à l'état fondu s'est élevée jusqu'à une valeur qui est supérieure de 25 à 625 % à la viscosité à l'état fondu du mélange initial.

**10.** Procédé selon la revendication 7 ou 8, **caractérisé** en ce que l'on développe partiellement la résine époxy jusqu'à un point où la viscosité à l'état fondu de la composition résultante s'est élevée jusqu'à une valeur supérieure d'au moins 250 % à la viscosité à l'état fondu du mélange initial.

**11.** Utilisation des compositions selon les revendications 1 à 6 ou préparées par un procédé selon l'une quelconque des revendications 7 à 10, en tant que compositions durcissables.

**12.** Utilisation selon la revendication 11, pour la préparation de stratifiés, de composites, de revêtements, d'adhésifs, de produits coulés, de moulages, d'enrobages de matériel électronique et de compositions d'empotage.

**13.** Procédé de préparation d'un produit durci, qui comprend l'étape consistant à soumettre à des conditions de durcissement une composition selon l'une quelconque des revendications 1 à 6 ou préparée par un procédé selon l'une quelconque des revendications 7 à 10.